# EUROPEAN PATENT SPECIFICATION

(11) **EP 0 754 196 B1**
(45) Date of publication and mention of the grant of the patent: **28.06.2000**
(21) Application number: 95914914.7
(22) Date of filing: 28.03.1995
(51) Int. Cl.: C08F 2/38

(54) **AQUEOUS POLYMERIZATION PROCESSES**
WÄSSRIGES POLYMERISATIONSVERFAHREN
PROCEDES DE POLYMERISATION AQUEUSE

(30) Priority: 04.04.1994 US 223418
(43) Date of publication of application: 22.01.1997
(73) Proprietor: XEROX CORPORATION, Stamford, CT 06904-1600 (US)
(72) Inventor: KEOSHKERIAN, Barkev, Thornhill, Ontario L4J 7E8 (CA); GEORGES, Michael, K., Guelph, Ontario N1G 3N8 (CA)
(74) Representative: Grünecker, Kinkeldey, Stockmair & Schwanhäusser Anwaltssozietät
(86) International application number: US9503819
(87) International publication number: WO9526987

(56) References cited:
- US-A- 4 581 429
- US-A- 5 194 547
- US-A- 5 322 912

## Description

The present invention is generally directed to processes for the preparation of aqueous or water soluble polymeric resins. More specifically, the present invention relates to aqueous polymerization processes to provide water soluble resin products which possess narrow polydispersity properties and which polymerization processes proceed with high monomer to polymer conversion. In particular, this invention relates to aqueous polymerization processes which yield polymers having number average molecular weights (Mₙ) above 1.000 and having a polydispersity ratio of the weight average molecular weight (M_{w}) to the number average molecular weight (Mₙ) of from 1.0 to 2.0.

It is generally accepted that known anionic and cationic polymerization processes used for the preparation of narrow polydispersity resins, block and multiblock polymers are not believed possible in aqueous or protic solvent containing polymerization media. The present invention enables the preparation of block and multi-block copolymers which preparation was heretofore not believed effectively possible in aqueous polymerization systems.

Of the known polymerization processes a preferred way to prepare polymers or copolymers having a narrow molecular weight distribution or polydispersity is by anionic processes. The use and availability of resins having narrow polydispersities in industrial applications is limited because anionic polymerization processes must be performed in the absence of atmospheric oxygen and moisture, require difficult to handle and hazardous initiator reagents, and consequently such polymerization processes are generally limited to small batch reactors. In addition, the monomers and solvents that are used must be of high purity and anhydrous thereby rendering the anionic process more expensive than alternatives which do not have these requirements. Thus, anionic polymerization processes are difficult and costly. It is desirable to have an aqueous free radical polymerization process that provides narrow molecular weight distribution resins that overcomes the shortcomings and disadvantages of the aforementioned anionic polymerization processes.

Free radical polymerization processes are generally chemically less sensitive than anionic processes to impurities in the monomers or solvents typically used and are substantially or completely insensitive to water.

The present invention, in embodiments, provides polymerization processes that enable control of resin molecular weight, weight distribution and modality of the products.

Copolymers prepared by free radical polymerization processes inherently have broad molecular weight distributions or polydispersities, generally greater than about four. One reason is that most free radical initiators selected have half lives that are relatively long, from several minutes to many hours, and thus the polymeric chains are not all initiated at the same time and which initiators provide growing chains of various lengths at any time during the polymerization process. Another reason is that the propagating chains in a free radical process can react with each other in processes known as coupling and disproportionation, both of which are chain terminating and polydispersity broadening reactions. In doing so, chains of varying lengths are terminated at different times during the reaction process which results in resins comprised of polymeric chains which vary widely in length from very small to very large and thus have broad polydispersities. If a free radical polymerization process is to be enabled for producing narrow molecular weight distributions, then all polymer chains must be initiated at about the same time and premature termination by coupling or disproportionation processes must be avoided or eliminated.

In commonly owned and assigned U.S. Patent No. 5,322,912 there is disclosed free radical polymerization processes for the preparation of a thermoplastic resin or resins comprising: heating from about 100 to about 160°C a mixture comprised of a free radical initiator, a stable free radical agent, and at least one polymerizable monomer compound to form the thermoplastic resin or resins with a high monomer to polymer conversion and a narrow polydispersity.

The following patents are of interest to the background of the present invention, the disclosures of which are incorporated by reference herein in their entirety:

In U.S. Patent No. 5,268,437, to Holy, issued December 7, 1993, discloses a high temperature aqueous processes for the polymerization of monoethylenically unsaturated carboxylic monomer to produce low molecular weight, water-soluble polymer products useful as detergent additives, scale inhibitors, dispersents and crystal growth modifies. Suitable monomers include acrylic acid, methacrylic acid, maleic acid, maleic anhydride, crotonic acid, and itaconic acid. The reaction are run at temperatures ranging from 130 to 240°C, preferably from 140 to 230°C, with polydispersities less than 2.5. The process can be continuous, semicontinuous, or batch.

In U.S. Patent No. 4,546,160, to Brand et al., issued October 8, 1985, is disclosed a process to continuously bulk polymerize acrylic monomers to prepare low molecular weight, uniform polymers employing minor amounts of initiator and, optionally solvents, at short residence times and moderate reaction temperatures to provide high yields of a product with polydispersities less than 3, suitable for high solids applications.

U.S. Patent 4,581,429 to Solomon et al., issued April 8, 1986, discloses a free radical polymerization process which controls the growth of polymer chains to produce short chain or oligomeric homopolymers and copolymers including block and graft copolymers. The process employs an initiator having the formula (in part) =N-O-X, where X is a free radical species capable of polymerizing unsaturated monomers. The molecular weights of the polymer products obtained are generally from 2,500 to 7,000 having polydispersities generally of 1.4 to 1.8, at low monomer to polymer conversion. The reactions typically have low conversion rates and use relatively low reaction temperatures of less than 100 degrees C, and use multiple stages.

U.S. Patent 5,059,657 to Druliner et al., issued October 22, 1991, discloses a polymerization process for acrylic and maleimide monomers by contacting the monomers with a diazotate, cyanate or hyponitrite, and N-chlorosuccinimide, N-bromosuccinimide or a diazonium salt. The polymer produced can initiate further polymerization, including use in block copolymer formation.

U.S. Patent 4,736,004 to Scherer, Jr. et al., issued April 5, 1988, discloses novel persistent perfluorinated free radicals which, upon thermal decomposition, yield free radicals which can be used to polymerize polymerizable monomers containing ethylenic unsaturation.

Other references are: J. Am. Chem. Soc., 1983, 5706-5708; Macromol., 1987, 1473-1488; Macromol., 1991, 6572-6577; U.S.A. 4,628,019 to Suematsu et al., issued August 10, 1986; U.S.A. 3,947,078 to Crystal, issued August 10, 1976; and U.S.A. 3,965,021 to Clemens et al., issued June 22, 1976.

WO 94/11412 discloses a free radical polymerization process for the preparation of a thermoplastic resin or resins comprising heating a mixture comprising a free radical initiator, a stable free radical agent and at least one polymerizable monomer compound to form a thermoplastic resin or resins with a high monomer to polymer conversion and a narrow poly dispersity.

The following references are also of interest: U.S.Patents 3,682,875; 3,879,360; 3,954,722; 4,201,848; 4,542,182; 4,581,429; 4,777,230; 5,059,657; 5,173,551; 5,191,008; 5,191,009; 5,194,496; 5,216,096; and 5,247,024.

In aqueous polymerization reaction processes of the prior art, various significant problems exist, for example difficulties in predicting or controlling both the polydispersity and modality of the polymers produced. These aqueous polymerization processes produce polymers with high weight average molecular weights (M_{w}) and low number average molecular weights (Mₙ) resulting in broad polydispersities or low molecular weight (Mₙ) and in some instances low conversion. Further, aqueous polymerization processes of the prior art are prone to generating excessive quantities of heat since the polymerization reaction is exothermic. As the viscosity of the reaction medium increases dissipation of heat becomes more difficult. This is referred to as the Trommsdorff effect as discussed and illustrated in Principles of Polymerization, G.Odian, 2nd Ed., Wiley-Interscience, N.Y., 1981, page 272, the disclosure of which is entirely incorporated herein by reference. This is particularly the situation for reactions with high concentrations of soluble monomer, for example greater than 30 to 50 percent by weight soluble monomer, which are conducted in large scale reactors with limited surface area and limited heat dissipation capacity. Moreover, the exothermic nature of free radical aqueous polymerization processes is often a limitation that severely restricts the concentration of reactants or the reactor size upon scale up.

Further, gel body formation in conventional free radical polymerization processes may result in a broad molecular weight distributions and/or difficulties encountered during filtering, drying and manipulating the product resin, particularly for highly concentrated reactions.

These and other disadvantages are avoided, or minimized with the aqueous polymerization processes of the present invention.

Thus, there remains a need for aqueous polymerization processes for the preparation of narrow polydispersity polymeric resins by economical and scalable free radical polymerization techniques and which polymers retain many or all of their desirable physical properties, for example, hardness, low gel content, processability, clarity, high gloss durability, and the like, while avoiding the problems of gel formation, exotherms, volume limited and multi-stage reaction systems, purification, performance properties of the polymer resin products, and the like, associated with prior art free radical aqueous polymerization methodologies.

The aqueous polymerization processes and thermoplastic resin products of the present invention are useful in many applications, for example, as a variety of specialty applications including water soluble toner and liquid immersion development ink resins used for electrophotographic imaging processes or where monomodal or mixtures of monomodal narrow molecular weight resins or block copolymers with narrow molecular weight distribution within each block component are suitable for use, for example, in thermoplastic films and aqueous borne coating technologies.

It is the object of the present invention
to provide aqueous polymerization processes for the preparation of water soluble polymeric resins;
to provide, in embodiments, an aqueous process for polymerizing water soluble monomers by heating an aqueous solution comprised of a free radical initiator, a stable free radical agent, at least one polymerizable monomer compound, and optionally one or more hydrophilic cosolvents, to form a water soluble resin or resins with a high monomer to polymer conversion and narrow polydispersity properties;
to provide aqueous polymerization processes for the production of diblock and multiblock water soluble polymers with high monomer to polymer conversion and a narrow polydispersity;
to provide aqueous polymerization processes which do not require the use of water immiscible organic solvents, or chain transfer agents as a means of controlling the molecular weight of the resulting polymers;
to provide aqueous polymerization processes which result in polymeric resin products having number average molecular weights above 1,000;
to provide a polymer or polymer mixtures having sufficiently low polydispersity properties and high monomer conversions such that residual monomer levels are low and are within industrially acceptable levels;
to provide an aqueous polymerization reaction system which affords narrow polydispersity homopolymeric or copolymeric thermoplastic resin products in high yield;
to provide an aqueous polymerization reaction system which may be conducted in the presence of a minimum amount of conventional reaction media such as water and mixtures of water and water miscible organic solvents;
to provide processes where coupling or disproportionation termination reactions are minimized by reversibly terminating the propagating free radical chains with a stable free radical agent which serves to moderate the exothermicity and modality properties of the aqueous polymerization process;
to provide for the acceleration of the dissociation of the free radical peroxide initiator by the addition of promoter compounds which include, for example, tertiary amines, which ensure that all polymeric chains are initiated nearly simultaneously or at about the same time;
to provide for the addition of small amount of organic acids, for example, sulfonic or carboxylic acids, to the reaction medium to increase the rate of monomer reaction without broadening the polydispersity of the polymeric resins and without inducing autopolymerization effects;
to provide processess for the preparation of water soluble thermoplastic resins by single pot processes employing suitable water soluble or water-cosolvent miscible monomer or monomers, free radical initiator, optional minimal amount of an emulsifier or surfactant which may provide rate enhancement or simplify isolation, but avoids emulsification or phase separation during the polymerization, and a stable free radical agent;
to provide processess for the preparation of water soluble resins using polymerization processes wherein the molecular weight of the growing polymer or copolymer chains increase over the entire time period of the polymerization reaction and wherein the percent conversion or degree of polymerization of monomer to polymer with respect to time or number average molecular weight is approximately linear, that is, polymerization processes which occur without the aforementioned Trommsdorff effect;
and to provide aqueous polymerization processes for the preparation of water soluble resins with narrow polydispersity properties and which polymerization processes are accomplished in a time efficient and economic manner by the optional addition of minor amounts of inorganic acid, organic acid, and amine promoter compounds.

This object is achieved by an aqueous polymerization process for the preparation of a water soluble thermoplastic resin or resins, comprising:
heating an aqueous solution comprising a free radical initiator, a stable free radical agent at east one polymerizable monomer compound, and optionally one or more hydrophilic cosolvents, wherein said at least one polymerizable monomer compound is substantially water soluble or is soluble in a mixture of water and a suitable cosolvent, and
polymerizing said at least one polymerizable monomer compound to form a water soluble thermoplastic resin or resins,
   wherein said thermoplastic resin or resins has a
polydispersity of from 1.1 to 2.0 and a monomer to polymer conversion of from 50 to 90%.

The present invention provides aqueous polymerization processes for preparing water soluble polymeric resins with well defined molecular weight properties and narrow polydispersities. The processes can be run as batch, semi-continuous or continuous processes. The processes provide for from 5 to 99 percent by weight of the reaction mixture to be water or water-cosolvent mixtures and the processes are conducted at from 100°C to 180°C. The processes produce polymer products having low molecular weight, narrow polydispersity, and low residual salt content or are salt free.

The present invention provides in embodiments a pseudoliving polymerization process that enables the synthesis of narrow polydispersity resins from water soluble or water-cosolvent miscible monomers. The process can, in embodiments, use known water soluble free radical initiators in combination with a stable free radical agent and water soluble monomers to afford narrow polydispersity water soluble resins.

In other embodiments the aqueous polymerization process of the present invention can be used to prepare block copolymers and multi-block polymer having narrow polydispersity properties wherein at least one of the blocks is water soluble and subsequently added blocks or segments may be only partially or entirely water insoluble thereby providing a means for preparing surface active or surfactant materials having well defined polydispersity and hydrophobe-lipophobe balance (HLB) properties.

The polymer resins produced by processes of the present invention, in embodiments, are essentially monomodal, that is the molecular weight distribution is narrow and indicative of a Poisson character and without shoulders or side bands. In embodiments, by repeating the heating step, comprising the combined initiation and polymerization step, there is provided a means for obtaining monomodal mixtures of polymer resins that are compositionally the same resin type having characteristics of both narrow polydispersity and known or selectable modality greater than 1. In embodiments, the process of the instant invention provides a means for conducting aqueous polymerization processes on multikilogram or larger scales. The aforementioned embodiments may be accomplished in a one or single pot reactor environment. In embodiments, polymeric chain growth proceeds by a pseudoliving mechanism and can provide resins of variable molecular weight from very low to very high, for example, less than 2,000 up to 200,000 while maintaining narrow molecular weight distributions or polydispersities. In embodiments, block and multiblock copolymers can be synthesized by the aforementioned stable free radical moderated aqueous polymerization processes wherein each block formed is well defined in length by the sequentially added and reacted monomer and wherein each additional block that is formed also possesses a narrow molecular weight distribution.

Preferably, said polymerizable monomer compound is a free radical reactive unsaturated monomer that is substantially water soluble or is soluble in a mixture of water and a suitable cosolvent and wherein the monomer is selected from the group consisting of acids, ammonium salts, and alkali metal salts of: styrene sulfonic and styrene carboxylic acids; vinyl sulfonic acids and vinyl sulfonates, vinyl phosphonic acid and derivatives thereof, amine, carboxyl, aldehyde, alkyl, cyano, and hydroxyl substituted acrylic acids and acrylic acid esters having from 2 to 20 carbon atoms; vinyl sulfones; conjugated dienes; acrylamide; methacrylamide; acrylic acid; methacrylic acid; acrolein; dimethylaminomethacrylate; hydroxy-lower alkyl, and amino-lower alkyl acrylates of the formula CH₂=C(-R¹)-(C=Z)-R² where R¹ is selected from the group consisting of hydrogen and alkyl with from 1 to 7 carbon atoms, R² is selected from the group consisting of -OR¹ and -NR¹₂, and where Z is selected from the group consisting of oxygen and sulfur atoms.

It is also preferred that the heating is accomplished in a period of time from 1 to 60 hours at a temperature of from 70 to 160°C.

It is also preferred that the stable free radical agent comprises a nitroxide stable free radical.

Preferably said process comprises further adding a water soluble or a water-cosolvent soluble inorganic acid, organic sulfonic or organic carboxylic acid during heating of said mixture thereby increasing the rate of formation of said thermoplastic resin or resins from said polymerization of said monomer compound.

Preferably said process comprises further adding a tertiary amine promoter compound to said mixture thereby increasing or accelerating the rate of dissociation of said free radical initiator and wherein said free radical initiator is an inorganic peroxide.

As used herein, the term "substantially water soluble" refers to, for example, that greater than 75 to 80 weight percent of the total monomer is miscible with water, and that greater than 80 to 95 weight percent, and preferably greater than about 98 percent of the total monomer resides or polymerizes in the aqueous phase.

The foregoing process can, in embodiments, be expanded to enable the formation of bimodal or multimodal water soluble thermoplastic resins by for example, adding to said water soluble thermoplastic resin or resins a second aqueous solution comprising a free radial initiator, a stable free radical agent, and at least one polymerizable monomer compound, wherein said polymerizable monomer compound of said second aqueous solution contains different monomer components from said polymerizable monomer compound of said aqueous solution, and said free radical initiator and said stable free radical agent of said second aqueous solution are the same or different from said free radical initiator and said stable free radical agent of said aqueous solution, and wherein there is formed a combined mixture;
heating and said combined mixture to form a third solution comprising a mixture or thermoplastic resins comprising a first product resin formed from said thermoplastic resin of claim 1 and added said second monomer, and a second product resin formed from said second monomer;
cooling said third mixture;
optionally isolating said mixture of thermoplastic product resins from said third solution, wherein said first product resin and said second product resin each possess a polydispersity of from 1.1 to 2.0, and wherein the mixture of thermoplastic resins possesses a modality of 2.

Higher modalities, for example, of from 3 to about 20 can be conveniently achieved, if desired, by the subsequent addition of additional fresh mixtures of monomer, free radical initiator, and stable free radical agent prior to a final cooling and isolation step.

In one embodiment the process comprises further adding to said water soluble thermoplastic resin or resins a second solution comprising at least one polymerizable monomer compound, wherein said polymerizable monomer compound of said second solution contains different monomer components from said polymerizable monomer compound of said aqueous solution, and wherein there is formed a combined mixture;
heating said combined mixture to form a third solution comprising a water soluble or water-cosolvent miscible diblock copolymer thermoplastic resins comprising a first product resin formed from said thermoplastic resin of claim 1 and said second monomer;
cooling said third solution;
optionally isolating said diblock copolymer thermoplastic resin product from said third solution and the diblock copolymer thermoplastic resin possesses a polydispersity of from 1.1 to 2.0 and a modality of 1.

In this embodiment said steps of adding, heating and cooling are repeated N times, to form a fourth aqueous solution containing a multiblock copolymer thermoplastic resin having N + 2 blocks and wherein N is a number from 1 to 20 representing the number of times said sequence is repeated, wherein the block or multiblock polymer resin is water soluble or insoluble.

In another embodiment, the process is characterized in that:
said free radical initiator is a peroxide free radical initiator,
said stable free radical agent is a nitroxide free radical agent;
said heating step is conducted at a temperature of from 100 to 160°C for a time period of 30 minutes to 10 hours;
said thermoplastic resin has a poly dispersity of from 1.1 to 1.5 and a modality of 1; and said process further comprises the steps of cooling said solution after said polymerizing step. Preferably this process comprises further the step of isolating said thermoplastic resin and/or washing and drying said thermoplastic resin.

One class of carboxylic acid monomers suitable for use in the present invention are C₃-C₆ monoethylenically unsaturated monocarboxylic acids, and the alkali metal and ammonium salts thereof. The C₃-C₆ monoethylenically unsaturated monocarboxylic acids include acrylic acid, methacrylic acid, crotonic acid, vinylacetic acid, and acryloxypropionic acid. Acrylic acid and methacrylic acid are the preferred monoethylenically unsaturated monocarboxylic acid monomers.

Another class of carboxylic acid monomers suitable for the present invention are C₄-C₆ monoethylenically unsaturated dicarboxylic acids and the alkali metal and ammonium salts thereof, and the anhydrides of the cis dicarboxylic acids. Suitable examples include maleic acid, maleic anhydride, itaconic acid, mesaconic acid, fumaric acid, and citraconic acid. Maleic anhydride and itaconic acid are preferred monoethylenically unsaturated dicarboxylic acid monomers.

The acid monomers useful in this invention may be in their acid forms or in the form of the alkali metal or ammonium salts of the acid. Suitable bases useful for neutralizing the monomer acids include sodium hydroxide, ammonium hydroxide and, potassium hydroxide. The acid monomers may be neutralized to a level of from 0 to 50 percent and preferably from 0 to 20 percent. More preferably, the carboxylic acid monomers are used in the completely neutralized form. Partial neutralization of the carboxylic acid monomers minimizes or eliminates corrosion on parts of the reaction equipment, but conversion of the monomers into polymer product may be diminished. The monomers may be neutralized prior to or during polymerization. The polymer products are often particularly useful in their partially or completely neutralized form.

In addition, up to 50 percent by weight of the total polymerizable monomers may be monoethylenically unsaturated carboxylic acid-free monomers. Suitable monoethylenically unsaturated carboxylic acid-free monomers must be copolymerizable with the carboxylic monomers. Typical monoethylenically unsaturated carboxylic acid-free monomers which are suitable for this invention include alkyl esters of acrylic or methacrylic acids such as methyl acrylate, ethyl acrylate, butyl acrylate, methyl methacrylate, ethyl methacrylate, butyl methacrylate and isobutyl methacrylate; hydroxyalkyl esters of acrylic or methacrylic acids such as hydroxyethyl acrylate, hydroxypropyl acrylate, hydroxyethyl methacrylate, and hydroxypropyl methacrylate; acrylamide, methacrylamide, N-tertiary butylacrylamide, N-methylacrylamide, N,N-dimethylacrylamide; acrylonitrile, methacrylonitrile, allyl alcohol, allylsulfonic acid, allylphosphonic acid, vinylphosphonic acid, dimethylaminoethyl acrylate, dimethylaminoethyl methacrylate, phosphoethyl methacrylate, N-vinyl pyrrolidone, N-vinylformamide, N-vinylimidazole, vinyl acetate, styrene, hydroxylated styrenes, styrenesulfonic acid and salts thereof, vinylsulfonic acid and salts thereof, and 2-acrylamido-2-methylpropane-sulfonic acid and salts thereof.

Hydrophilic monomers, polymers and copolymers of the present invention can, in embodiments be separated from one another or from the polymerization reaction mixture by, for example, changing the pH of the reaction media and other well known conventional separation techniques.

Other suitable water soluble monomers are diallyldimethylammonium chloride, acrylamides, alkyl and aryl amide derivatives thereof, and quaternized alkyl and aryl acrylamide derivatives.

Suitable initiators for the processes of the present invention are any conventional free radical initiators which have a half-life of at least 1 second at the polymerization temperature. Preferably, the initiator will have a half life of from 10 second to 2 hours, more preferably from 10 seconds to 10 minutes at the reaction temperature. These initiators include oxygen, hydrogen peroxide, certain alkyl hydroperoxides, dialkyl peroxides, peresters, percarbonates, peroxides, persulfates and azo initiators. Specific examples of some suitable initiators include hydrogen peroxide, t-butyl hydroperoxide, di-tertiary butyl peroxide, tertiary-amyl hydroperoxide, potassium persulfate, and methylethyl ketone peroxide. The initiators are normally used in amounts of from 0.05 percent to 33 percent based on the weight of total polymerizable monomer. A preferred range is from 0.5 to 20 percent by weight of the total polymerizable monomer.

Water-soluble redox initiators may also be used. These initiators include, but are not limited to, sodium bisulfite, sodium sulfite, isoascorbic acid, sodium formaldehyde-sulfoxylate, and the like, used with suitable oxidizing agents, such as the thermal initiators noted above. If used, the redox initiators may be used in amounts of 0.05 percent to 16 percent, based on the weight of total monomer. A preferred range is from 0.5 to 5 percent by weight of total monomer. Many of these initiators introduce salt by-products into the aqueous polymer product. It is preferred that the level of these initiators, if used, be minimized.

Hydrophilic stable free radical compounds are known, for example U.S.Patent 5,264,204, discloses a magnetic resonance organ and tissue imaging method using these compounds, and a number of other suitable stable free radical compounds are available commercially and are readily accessible synthetically, for example, as disclosed in "Synthetic Chemistry of Stable Nitroxides", by L. B. Volodarsky et al., CRC Press, 1993, ISBN:0-8493-4590-1.

The monomers are polymerized as aqueous solutions. The reaction mixture may contain from 5 to 95 percent by weight water as the solvent, preferably from 20 to 90 percent by weight water, and most preferably from 25 to 85 percent by weight water as the solvent.

The aqueous polymerization reactions can be supplemented with a water miscible or hydrophilic cosolvent to help ensure that the reaction mixture remains a homogeneous single phase throughout the monomer conversion. Any water soluble or water miscible cosolvent may be selected so long as aqueous solvent media is effective in providing a solvent system which avoids precipitation or phase separation of the reactants or polymer products until after all polymerization reactions have been completed. Exemplary cosolvents useful in the present invention may be selected from the group consisting of aliphatic alcohols, glycols, ethers, glycol ethers, pyrrolidines, N-alkyl pyrrolidinones, N-alkyl pyrrolidones, polyethylene glycols, polypropylene glycols, amides, carboxylic acids and salts thereof, esters, organosulfides, sulfoxides, sulfones, alcohol derivatives, hydroxyether derivatives such as butyl CARBITOL or CELLOSOLVE and amino alcohols, ketones, derivatives thereof, and mixtures thereof. Specific examples include methanol, ethanol, propanol, dioxane, ethylene glycol, propylene glycol, diethylene glycol, glycerine, dipropylene glycol, tetrahydrofuran, and other water soluble or water miscible materials, and mixtures thereof. When mixtures of water and water soluble or miscible organic liquids are selected as the aqueous reaction media, the water to cosolvent weight ratio typically ranges from 100:0 to 10:90, and preferably from 97:3 to 25:75.

Temperature of the polymerization may range from 100°C to 180°C, preferably from 110°C to 175°C. At temperatures below 100°C, the reaction rate is slow and industrially impractical without the aid of an acid or base accelerating additive compound. At temperatures above 180°C, conversion of the monomer into polymer decreases and uncertain and undesirable by-products are formed. Frequently, these by-products discolor the polymer mixture and may necessitate a purification step to remove them or they may be intractable.

Since water or water and miscible cosolvent admixtures are used as the reaction solvent, the elevated temperatures of the polymerization require that the polymerization reactor be equipped to operate at elevated pressure. In general, it is preferred to conduct the polymerization at from 69 to 13790 kPa (10 to 2,000 pounds per square inch (psi)), and more preferably at from 345 to 6895 kPa (50 to 1,000 psi).

The molecular weights referred to are measured by gel permeation chromatography using, for example, a polyethylene oxide standard unless specifically stated otherwise.

Although not being desired to be limited by theory, it is believed that when polymerization reaction processes of the present invention are performed at a temperature at about or above 100°C, the exact temperature depending on the initiator used, all the polymer chains are expected to be initiated at about the same time. This is believed to be an important feature in forming polymer chain products having narrow polydispersities.

The aforementioned undesirable chain coupling or disproportionation termination reactions, so prevalent under the conditions of the prior art free radical polymerization systems, is suppressed under the conditions of the present invention because the effective instantaneous concentration and availability of living free chains is extremely small. In addition, stable free radical agent of the instant invention do not initiate polymerization so that new chains are not initiated after an initial period during which all polymer chains are initiated at about the same time.

Propagating chains of the present invention are referred to as pseudoliving because the stable free radical agent adds to a propagating chain and the chain is temporarily, but reversibly, terminated. The term "protected" as used herein refers, for example, to the availability of chain radical species for selective rather than indiscriminant further reaction with monomer. An unmoderated free radical polymerization chain, that is, a free radical polymerization process without a stable free radical agent present, in contrast, has a reactive or "open" chain end throughout its lifetime which is typically irreversibly terminated on the order of seconds.

The present invention provides several specific advantages in embodiments as follows.

With the process of the present invention, polymer product polydispersities can be varied from 1.1 to 2.0 depending on the monomer/comonomer system by varying the ratio of stable free radical agent to free radical initiator molar concentration. When the polymerization process conditions of the present invention are attempted without using the a stable free radical (SFR) additive, broad molecular weight resins are obtained.

The stable free radical agent moderated aqueous polymerization reactions may be performed in a variety of media for example, water or water and water miscible cosolvent mixtures, using preferably aqueous mixtures of higher boiling water miscible solvents such as the aforementioned glycols or alcohols.

During the reaction of monomer or mixed monomers to form polymers, the reaction time may be varied over 1 to 60 hours, preferably between 2 to 10 hours and optimally 3 to 7 hours. The optimal reaction time may vary depending upon the temperature, the volume and scale of the reaction, and the quantity and type of polymerization initiator and stable free radical agent selected.

The polymerization reaction temperature is kept relatively constant throughout the heating step by providing an adjustable external heat source and the temperature is from 60°C to 180°C, and preferably between 100°C and 160°C and optimally in embodiments 120°C to 150°C. Reactions performed above 200°C tend to result in a broadening of the polydispersity. A reaction volume may be selected for any size that enables simple adding, mixing, reacting and isolating the product resins on an economic or convenient scale.

The free radical initiator can be any free radical polymerization initiator capable of initiating a free radical polymerization process of unsaturated monomers and includes peroxide initiators such as benzoyl peroxide, persulfate initiators such as potassium persulfate, and azo initiators such as azobisisobutyronitrile. The initiator concentration employed is 0.2 to 16.0 weight percent of the total weight of monomer to be polymerized and is determined by the desired molecular weight of the resin. As the initiator concentration is decreased relative to the weight or molar equivalents of monomer used, the molecular weight or the thermoplastic resin product increases.

Water soluble free radical initiators employed in the processes of this invention are those that are traditionally used in aqueous polymerization. Examples of water soluble free radical initiators are: persulfates; water soluble peroxides and hydroperoxides; more specifically, sodium, potassium and ammonium persulfate; peroxides such as hydrogen peroxide, t-butyl hydroperoxide, cumene hydroperoxide, para-menthane hydroperoxide; and peroxy carbonates. Other water soluble initiators of similar decomposition mechanism may be used if desired.

A preferred initiator is one which has a one-hour half-life at 60 to 90°C and a ten-hour half-life at 50 to 80°C. Other peroxides, such as peresters and peracids having somewhat higher one-hour half-life/temperature relationships, may also be used if they are accompanied by a promoter compound such as tertiary amine. Such initiators are, for example: 2,4-dimethyl-2,5-dibenzyl peroxyhexane (138°C), tert-butyl peroxybenzoate (125°C), di-tert-butyl diperoxyphthalate (123°C) and methyl ethyl ketone peroxide (133°C). The figures in parentheses are the 1 hour half-life temperatures.

Still other initiators may also be employed if accompanied by a promoter compound in versions of this process, for example, 2,4-pentanedione peroxide (167°C), di-t-butyl peroxide (149°C), 2,5-dimethyl-2,5-di(t-butylperoxy)-hexyne (149°C), 2,5-dimethyl-2,5-di(t-butylperoxy)-hexyne (149°C) and 2,5-dimethyl-2,5-di(t-butylperoxy) hexane (138°C).

Preferred initiator compounds are: t-butyl peroxy isobutyrate (120°C); t-butyl peroxy 2-ethylhexanoate (95°C); t-butyl pivalate (76°C); and t-amyl peroxy 2-ethyl hexanoate (92°C). Particularly preferred free radical initiators are water soluble and partially water soluble persulfate compounds.

The monomer or monomers to be polymerized are dissolved in water or aqueous mixtures of polar protic or aprotic organic solvents. The resultant aqueous solution usually contains a suitable water-soluble, free-radical generating initiator such as a peroxide or a persulfate as defined above. The monomer or monomers are used in effective amount relative to the free radical initiator, and stable free radical agent, as defined hereinafter.

The stable free radical agent can be any stable free radical and includes nitroxide free radicals, for example, PROXYL (2,2 5,5-tetramethyl-1-pyrrolidinyloxy) and derivatives thereof, DOXYL (4,4-dimethyl-3-oxazolinyloxy) and derivatives thereof, and TEMPO (2,2,6,6-tetramethyl-1-piperidinyloxy) and derivatives thereof. These stable free radical agent materials are well known in the literature, for example G. Moad et.al., Tetrahedron Letters,-22, 1165 (1981) as free radical polymerization inhibitors. Other suitable nitroxides are di-tert-butyl nitroxide and related di-tertiary alkyl substituted nitroxides. However, under the polymerization conditions of the present invention, the stable free radical agents function not as inhibitors but as moderators to harness the normally highly reactive and indiscriminate propagating intermediate free radical species. The stable free radical agents are preferably soluble in the homogeneous water and monomer phase where predominantly all the polymerization of monomers occurs. Stable free radical agents which have limited water solubility are still useful, but may require a water miscible cosolvent or else the stable free radical compounds result in less predictable polymerization processes. If the stable free radical agent separates out of the aqueous phase to any great extent then the balance desired between the mole ratio of the stable free radical agent, free radical initiator, and propagating free radical polymer chain species may be upset.

The molar ratio of the stable free radical (SFR) agent to free radical initiator (INIT) residing in the aqueous phase is from 0.5 to 5.0, and preferably in the range from 0.4 to 4.0. Although not wanting to be limited by theory, in an embodiment, the molar ratio [SFR:INIT.] of stable free radical agent, for example, TEMPO, to free radical initiator, for example, potassium persulfate is about 2.0 and is believed to be important for success of the process. If the [SFR:INIT.] is too high then the reaction rate is noticeably inhibited. If the [SFR:INIT.] is too low then the reaction product has undesired increased polydispersity. It should be noted that when water soluble styrene compounds are polymerized to polystyrene derivatives without the stable free radical agent of the present process, the product polymers isolated have polydispersities of 2.0 and above.

In embodiments, the molar ratio of monomer content to stable free radical agent to free radical initiator is from 6.0:0.2:1 to 10,000:2.5:1 and preferably in the range of 125:2.0:1 to 7,000:1.3:1.

Processes of the present invention, in embodiments, provide for selective low, intermediate, and high monomer to polymer conversion rates, or degrees of polymerization, and preferably, for example, of 90 percent by weight.

The low weight average molecular weight resin products having narrow polydispersity properties, as is also the situation with intermediate and high molecular weight products of the present invention, may be obtained without the use of a chain transfer agent.

Processes of the present invention, in embodiments provide for relatively high weight average molecular weights, from weight average molecular weights ranging in size of from 2,000 to 200,000 while delivering narrow polydispersity products.

The monomers that can be used are any monomer capable of undergoing a free radical polymerization and include but are not limited to styrene, substituted styrenes and derivatives thereof, for example, hydroxylated and methylated styrenes, acrylates, methacrylates, butadiene and any conjugated diene monomer sufficiently reactive under the specified stable free radical moderated polymerization reaction conditions to afford a stable free radical reaction adduct and subsequently high molecular weight polymer products, for example, polymers of water soluble derivatives of isoprene and myrcene.

The polymerization reaction rate of the monomers may, in embodiments, be accelerated and the reaction time reduced to from 3 to 7 hours from greater than 16 hours by the addition of a minor amount of a protic acid selected from the group consisting of inorganic acids, such as sulfuric, hydrochloric, and organic sulfonic and carboxylic acids, where camphorsulfonic acid is a preferred organic sulfonic acid and where the molar ratio of stable free radical to added acid is from 1:1 to 11:1, with a preferred ratio of between 1.5:1 and 5:1. Excessive addition of inorganic and organic acid beyond the aforementioned amounts causes the resin polydispersity to broaden.

By cooling the polymerization reaction to below 60 to 80°C, the stable free radical moderated polymerization process is effectively quenched or terminated. Each new or subsequent addition of mixtures containing monomer, stable free radical and initiator accompanied by heating provides a new polymeric species having a narrow molecular weight distribution and each new polymer species continues to grow independently of the other polymer species already established thereby providing the capability of forming well defined, narrow polydispersity, bimodal and multimodal polymer mixtures.

Alternatively, block copolymer resins may also be prepared whereby after each desired block has been formed a new monomer or monomers is added, without the addition of more initiator or stable free radical agent, to form a new block wherein each block component is well defined in length and has a narrow molecular weight distribution and having properties depending on the repeated sequence and the monomers chosen for incorporation. Monomers added subsequent to the formation of the first formed thermoplastic resin may be water soluble or water insoluble. Judicious selection of the water solubility properties of added monomers and the resulting polymeric segment enables convenient synthetic routes to block and multiblock copolymers with narrow polydispersities that are useful, for example, as surfactants and emulsifiers.

The polymeric products of the present invention may be optionally crosslinked with, for example, known crosslinking, coupling, or curing agents such as divinyl benzene either *in situ* or in a separate post polymerization process step.

Additional optional known additives may be used in the polymerization reactions which do not interfere with the objects of the invention and which may provide additional performance enhancements to the resulting product, for example, colorants, lubricants, release or transfer agents, surfactants, stabilizers, antifoams and antioxidants.

Polymer resins possessing a discrete mixture of monomodal, that is a well defined multimodal molecular weight distribution may in embodiments thereof provide several advantages, particularly for electrophotographic toner compositions such as: melt rheology properties including improved flow and elasticity; and improved performance properties such as triboelectrification, admix rates, and shelf life stabilities.

In the aforementioned U.S. Patent No. 5,312.912, there is disclosed a monomer polymerized in bulk or in the absence of a solvent or diluent, that is neat, using a mixture of styrene monomer, a free radical initiator, and a stable free radical agent at constant temperature. A plot of weight percent monomer conversion versus number average molecular weight indicates that a nearly linear relationship holds for bulk polymerization reaction media using stable free radical agent moderated processes and which relationship is believed to be operative in the present invention. Thus, the Trommsdorff effect, that is, known exothermic heating or autoacceleration of the monomer conversion reaction rate and randomization of molecular weights observed in unmoderated free radical polymerization reactions is effectively suppressed in aqueous polymerization processes of the present invention even at high solids content, high conversion, and elevated temperature free radical initiated polymerization reactions.

Toner compositions can be prepared by a number of known methods, such as admixing and heating resin particles obtained with the processes of the present invention such as water soluble styrene butadiene copolymer derivatives, pigment particles such as magnetite, carbon black, or mixtures thereof, and cyan, yellow, magenta, green, brown, red, or mixtures thereof, and preferably from 0.5 percent to 5 percent of charge enhancing additives in a toner extrusion device, such as the ZSK53 available from Werner Pfleiderer, and removing the formed toner composition from the device. Subsequent to cooling, the toner composition is subjected to grinding utilizing, for example, a Sturtevant micronizer for the purpose of achieving toner particles with a volume median diameter of less than 25 µm (microns), and preferably of from 6 to 12 µm (microns), which diameters are determined by a Coulter Counter. Subsequently, the toner compositions can be classified utilizing, for example, a Donaldson Model B classifier for the purpose of removing toner fines, that is toner particles less than 4 µm (microns) volume median diameter.

Illustrative examples of suitable toner resins selected for the toner and developer compositions of the present invention include polyamides, styrene acrylates, styrene methacrylates, styrene butadienes, vinyl resins, including homopolymers and copolymers of two or more vinyl monomers; vinyl monomers include styrene, p-chlorostyrene, butadiene, isoprene, and myrcene; vinyl esters like esters of monocarboxylic acids including methyl acrylate, ethyl acrylate, n-butyl acrylate, isobutyl acrylate, dodecyl acrylate, n-octyl acrylate, phenyl acrylate, methyl methacrylate, ethyl methacrylate, and butyl methacrylate; acrylonitrile, methacrylonitrile and acrylamide. Preferred toner resins include styrene butadiene copolymers and mixtures thereof. Other-preferred toner resins include styrene/methacrylate copolymers, PLIOLITES®; suspension polymerized styrene butadienes, reference U.S. Patent 4,558,108, the disclosure of which is totally incorporated herein by reference.

In toner compositions, the resin particles are present in a sufficient but effective amount for example from 70 to 90 weight percent. Thus, when 1 percent by weight of the charge enhancing additive is present and 10 percent by weight of pigment or colorant, such as carbon black, is contained therein, 89 percent by weight of resin is selected. Also, the charge enhancing additive may be coated on the pigment particle. When used as a coating, the charge enhancing additive is present in an amount of from 0.1 weight percent to 5 weight percent, and preferably from 0.3 weight percent to 1 weight percent.

Numerous well known suitable pigments or dyes can be selected as the colorant for the toner particles including, for example, carbon black like REGAL 330, nigrosine dye, aniline blue, magnetite, or mixtures thereof. The pigment, which is preferably carbon black, should be present in a sufficient amount to render the toner composition highly colored. Generally, the pigment particles are present in amounts of from 1 percent by weight to 20 percent by weight and preferably from 2 to 10 weight percent based on the total weight of the toner composition; however, lesser or greater amounts of pigment particles can be selected.

When the pigment particles are comprised of magnetites, thereby enabling single component toners in some instances, which magnetites are a mixture of iron oxides (FeO·Fe₂O₃) including those commercially available as Mapico Black, they are present in the toner composition in an amount of from 10 percent by weight to 70 percent by weight, and preferably in an amount of from 10 percent by weight to 50 percent by weight. Mixtures of carbon black and magnetite with from 1 to 15 weight percent of carbon black, and preferably from 2 to 6 weight percent of carbon black, and magnetite, such as MAPICO BLACK, in an amount of, for example, from 5 to 60, and preferably from 10 to 50 weight percent can be selected.

There can also be blended with the toner compositions of the present invention external additive particles including flow aid additives, which additives are usually present on the surface thereof. Examples of these additives include colloidal silicas, such as AEROSIL, metal salts and metal salts of fatty acids inclusive of zinc stearate, aluminum oxides, cerium oxides, and mixtures thereof, which additives are generally present in an amount of from 0.1 percent by weight to 5 percent by weight, and preferably in an amount of from 0.1 percent by weight to 1 percent by weight. Several of the aforementioned additives are illustrated in U.S. Patents 3,590,000 and 3,800,588, the disclosures of which are totally incorporated herein by reference.

With further respect to the present invention, colloidal silicas, such as AEROSIL, can be surface treated with the charge additives in an amount of from 1 to 30 weight percent and preferably 10 weight percent followed by the addition thereof to the toner in an amount of from 0.1 to 10 and preferably 0.1 to 1 weight percent.

Also, there can be included in the toner compositions low molecular weight waxes, such as polypropylenes and polyethylenes commercially available from Allied Chemical and Petrolite Corporation, EPOLENE N-15 commercially available from Eastman Chemical Products, Inc., VISCOL 550-P, a low weight average molecular weight polypropylene available from Sanyo Kasei K.K., and similar materials. The commercially available polyethylenes selected have a molecular weight of from 1,000 to 1,500, while the commercially available polypropylenes utilized for the toner compositions are believed to have a molecular weight of from 4,000 to 5,000. Many of the polyethylene and polypropylene compositions useful in the present invention are illustrated in British Patent No. 1,442,835, the disclosure of which is totally incorporated herein by reference.

The low molecular weight wax materials are optionally present in the toner composition or the polymer resin beads of the present invention in various amounts, however, generally these waxes are present in the toner composition in an amount of from 1 percent by weight to 15 percent by weight, and preferably in an amount of from 2 percent by weight to 10 percent by weight and may in embodiments function as fuser roll release agents.

Encompassed within the scope of the present invention are colored toner and developer compositions comprised of toner resin particles, carrier particles, the charge enhancing additives illustrated herein, and as pigments or colorants red, blue, green, brown, magenta, cyan and/or yellow particles, as well as mixtures thereof. More specifically, with regard to the generation of color images utilizing a developer composition with charge enhancing additives, illustrative examples of magenta materials that may be selected as pigments include, for example, 2,9-dimethyl-substituted quinacridone and anthraquinone dye identified in the Color Index as CI 60710, CI Dispersed Red 15 and diazo dye identified in the Color Index as CI 26050, CI Solvent Red 19. Illustrative examples of cyan materials that may be used as pigments include copper tetra-4-(octadecyl sulfonamido) phthalocyanine, X-copper phthalocyanine pigment listed in the Color Index as CI 74160, CI Pigment Blue, and Anthrathrene Blue, identified in the Color Index as CI 69810 and Special Blue X-2137; while illustrative examples of yellow pigments that may be selected are diarylide yellow 3,3-dichlorobenzidene acetoacetanilides, a monoazo pigment identified in the Color Index as CI 12700, CI Solvent Yellow 16, a nitrophenyl amine sulfonamide identified in the Color Index as Foron Yellow SE/GLN, CI Dispersed Yellow 33, 2,5-dimethoxy-4-sulfonanilide phenylazo-4'-chloro-2,5-dimethoxy acetoacetanilide, and Permanent Yellow FGL. The aforementioned pigments are incorporated into the toner composition in various suitable effective amounts providing the objectives of the present invention are achieved. In one embodiment, these colored pigment particles are present in the toner composition in an amount of from 2 percent by weight to 15 percent by weight calculated on the weight of the toner resin particles.

For the formulation of developer compositions, there are mixed with the toner particles carrier components, particularly those that are capable of triboelectrically assuming an opposite polarity to that of the toner composition. Accordingly, the carrier particles are selected to be of a negative polarity enabling the toner particles, which are positively charged, to adhere to and surround the carrier particles. Illustrative examples of carrier particles include iron powder, steel, nickel, iron, ferrites, including copper zinc ferrites. Additionally, there can be selected as carrier particles nickel berry carriers as illustrated in U.S. Patent 3,847,604, the disclosure of which is totally incorporated herein by reference. The selected carrier particles can be used with or without a coating, the coating generally containing terpolymers of styrene, methylmethacrylate, and a silane, such as triethoxy silane, reference U.S. Patent 3,526,533, U.S. Patent 4,937,166, and U.S. Patent 4,935,326, the disclosures of which are totally incorporated herein by reference, including for example KYNAR and polymethylmethacrylate mixtures (40/60). Coating weights can vary as indicated herein; generally, however, from 0.3 to 2, and preferably from 0.5 to 1.5 weight percent coating weight is selected.

Furthermore, the diameter of the carrier particles, preferably spherical in shape, is generally from 50 microns to 1,000 microns, and in embodiments 175 microns thereby permitting them to possess sufficient density and inertia to avoid adherence to the electrostatic images during the development process. The carrier component can be mixed with the toner composition in various suitable combinations, however, best results are obtained when 1 to 5 parts per toner to 10 parts to 200 parts by weight of carrier are selected.

The toner composition of the present invention can be prepared by a number of known methods as indicated herein including extrusion melt blending the toner resin particles, pigment particles or colorants, and a charge enhancing additive, followed by mechanical attrition. Other methods include those well known in the art such as spray drying, melt dispersion, emulsion aggregation, and extrusion processing. Also, as indicated herein the toner composition without the charge enhancing additive in the bulk toner can be prepared, followed by the addition of charge additive surface treated colloidal silicas.

The toner and developer compositions may be selected for use in electrostatographic imaging apparatuses containing therein conventional photoreceptors providing that they are capable of being charged positively or negatively. Thus, the toner and developer compositions can be used with layered photoreceptors that are capable of being charged negatively, such as those described in U.S. Patent 4,265,990, the disclosure of which is totally incorporated herein by reference. Illustrative examples of inorganic photoreceptors that may be selected for imaging and printing processes include selenium; selenium alloys, such as selenium arsenic and selenium tellurium; halogen doped selenium substances; and halogen doped selenium alloys.

The toner compositions are usually jetted and classified subsequent to preparation to enable toner particles with a preferred average diameter of from 5 to 25 microns, and more preferably from 8 to 12 microns. Also, the toner compositions preferably possess a triboelectric charge of from 0.1 to 2 femtocoulombs per micron as determined by the known charge spectrograph. Admix time for toners are preferably from 5 seconds to 1 minute, and more specifically from 5 to 15 seconds as determined by the known charge spectrograph. These toner compositions with rapid admix characteristics enable, for example, the development of images in electrophotographic imaging apparatuses, which images have substantially no background deposits thereon, even at high toner dispensing rates in some instances, for instance exceeding 20 grams per minute; and further, such toner compositions can be selected for high speed electrophotographic apparatuses, that is those exceeding 70 copies per minute.

Also, the toner compositions prepared from resins of the present invention possess desirable narrow charge distributions, optimal charging triboelectric values, preferably of from 10 to 40, and more preferably from 10 to 35 microcoulombs per gram as determined by the known Faraday Cage methods with from 0.1 to 5 weight percent in one embodiment of the charge enhancing additive; and rapid admix charging times as determined in the charge spectrograph of less than 15 seconds, and more preferably in some embodiments from 1 to 14 seconds.

The following Examples are being supplied to further define various species of the present invention, it being noted that these Examples are intended to illustrate and not limit the scope of the present invention. Parts and percentages are by weight unless otherwise indicated.

### EXAMPLE I

Styrenesulfonate sodium salt (10 g), 2,2,6,6-tetramethyl-1-piperidinyloxy, free radical (TEMPO) (0.31 g) and sodium bisulfite (0.13 g) were mixed together in 4.0 g of ethylene glycol/water (3:1) and heated to about 45°C. Potassium persulphate (0.27 g) was added and the reaction mixture was heated to 65°C and held there for 2 hours. The reaction mixture was then heated to reflux (between 115 and 125°C) for 8 hours. Precipitation of the product in 400 mL of acetone/water (1:1) afforded a polymer with M_{w}= 14,394, Mₙ =10,624, and polydispersity of 1.35 as determined by GPC.

### EXAMPLE II

Styrenesulfonate sodium salt (30 g), 2,2,6,6-tetramethyl-1-piperidinyloxy, free radical (TEMPO) (1.9 g) and sodium bisulfite (0.8 g) were mixed together in 120 g of ethylene glycol/water (3:1) and heated to about 45°C. Potassium persulphate (1.6 g) was added and the reaction mixture was heated to 65°C and held there for 2 hours. The reaction mixture was then heated to reflux (between 115 and 125°C) for 8 hours. Precipitation of the product in 1L of acetone/water (1:1) afforded a polymer with M_{w}= 3,711, Mₙ = 2,893, and polydispersity of 1.28 as determined by GPC.

### EXAMPLE III

Example II was repeated with the exception that the following were used: styrenesulfonate sodium salt (150 g), TEMPO (0.9 g), potassium persulfate (0.8 g), sodium bisulfite (0.4 g) mixed with 400 g of ethylene glycol/water (3:1) for 4.5 hours. The product was precipitated with 1.5 L methanol/acetone (2:1) to afford a polymer with M_{w} = 44,795, Mₙ = 35,980, and polydispersity of 1.24 as determined by GPC.

### EXAMPLE IV

### Magnetic Toner Preparation and Evaluation

The polymer resin (74 weight percent of the total mixture) obtained by the stable free radical polymerization processes in Example I may be melt extruded with 10 weight percent of REGAL 330 carbon black and 16 weight percent of MAPICO BLACK magnetite at 120°C, and the extrudate pulverized in a Waring blender and jetted to 8 µm (micron) number average sized particles. A positively charging magnetic toner may be prepared by surface treating the jetted toner (2 grams) with 0.12 gram of a 1:1 weight ratio of AEROSIL R972 (Degussa) and TP-302 a naphthalene sulfonate and quaternary ammonium salt (Nachem/Hodogaya SI) charge control agent.

Developer compositions may then be prepared by admixing 3.34 parts by weight of the aforementioned toner composition with 96.66 parts by weight of a carrier comprised of a steel core with a polymer mixture thereover containing 70 percent by weight of KYNAR, a polyvinylidene fluoride, and 30 percent by weight of polymethyl methacrylate; the coating weight being about 0.9 percent. Cascade development may be used to develop a Xerox Model D photoreceptor using a "negative" target. The light exposure may be set between 5 and 10 seconds and a negative bias used to dark transfer the positive toned images from the photoreceptor to paper.

Fusing evaluations may be carried out with a Xerox Corporation 5028 soft silicone roll fuser, operated at 7.62 cm (3 inches) per second.

The minimum fix and hot offset temperatures of stable free radical polymerization polymers having narrow polydispersities as toners are expected to be improved over toners prepared from resins synthesized by a free radical polymerization process without a stable free radical agent present affording broad polydispersities. The actual fuser roll temperatures may be determined using an Omega pyrometer and was checked with wax paper indicators. The degree to which a developed toner image adhered to paper after fusing is evaluated using a Scotch tape test. The fix level is expected to be excellent and comparable to that fix obtained with toner compositions prepared from other methods for preparing toners having resins with high molecular weights and narrow polydispersities. Typically greater than 95 percent of the toner image remains fixed to the copy sheet after removing a tape strip as determined by a densitometer.

Images may be developed in a xerographic imaging test fixture with a negatively charged layered imaging member comprised of a supporting substrate of aluminum, a photogenerating layer of trigonal selenium, and a charge transport layer of the aryl amine N,N'-diphenyl-N,N'-bis(3-methylphenyl)1,1'-biphenyl-4,4'-diamine, 45 weight percent, dispersed in 55 weight percent of the polycarbonate MAKROLON, reference U.S. Patent 4,265,990, the disclosure of which is totally incorporated herein by reference; images for toner compositions prepared from the copolymers derived from for example. Example XI are expected to be of excellent quality with no background deposits and of high resolution over an extended number of imaging cycles exceeding, it is believed, about 75,000 imaging cycles.

Other toner compositions may be readily prepared by conventional means from the polymer and copolymer resins of the present invention including colored toners, single component toners, multi-component toners, and toners containing special performance additives.

The stable free radical agent moderated aqueous polymerization processes of the present invention may be applied to a wide range of organic monomers to provide novel toner resin materials with desirable electrophotographic properties. For example, the block copolymers have application as dispersents for photoreceptor pigments. The multimodal resins have application to low melt resins and certain monomodal resins may be used to modify the surface of carbon black and pigment particles to make the pigment particles more miscible with a host polymer or dispersing medium. Narrow molecular weight water soluble resins such as poly(sulfonated styrene - butadiene) find application as improved toner resins for general application and particularly for detoning or deinking applications which may be achieved by heating at elevated temperatures in aqueous alkali solutions.

## Claims

1. An aqueous polymerization process for the preparation of a water soluble thermoplastic resin or resins, comprising:
heating an aqueous solution comprising a free radical initiator, a stable free radical agent, at least one polymerizable monomer compound, and optionally one or more hydrophilic cosolvents, wherein said at least one polymerizable monomer compound is substantially water soluble or is soluble in a mixture of water and a suitable cosolvent, and
polymerizing said at least one polymerizable monomer compound to form a water soluble thermoplastic resin or resins,
wherein said thermo plastic resin or resins has a
polydispersity of from 1.1 to 2.0 and a monomer to polymer conversion of from 50 to 90%.

2. The process in accordance with claim 1 wherein the polymerizable monomer compound is a free radical reactive unsaturated monomer that is substantially water soluble or is soluble in a mixture of water and a suitable cosolvent and wherein the monomer is selected from the group consisting of acids, ammonium salts, and alkali metal salts of: styrene sulfonic and styrene carboxylic acids; vinyl sulfonic acids and vinyl sulfonates, vinyl phosphonic acid and derivatives thereof, amine, carboxyl, aldehyde, alkyl, cyano, and hydroxyl substituted acrylic acids and acrylic acid esters having from 2 to 20 carbon atoms; vinyl sulfones; conjugated dienes; acrylamide; methacrylamide; acrylic acid; methacrylic acid; acrolein; dimethylaminomethacrylate; hydroxy-lower alkyl, and amino-lower alkyl acrylates of the formula CH₂=C(-R¹)-(C=Z)-R² where R¹ is selected from the group consisting of hydrogen and alkyl with from 1 to 7 carbon atoms, R² is selected from the group consisting of -OR¹ and -NR¹₂, and where Z is selected from the group consisting of oxygen and sulfur atoms.

3. The process in accordance with claim 1 wherein the heating is accomplished in a period of time of from 1 to 60 hours at a temperature of from 70 to 160°C.

4. The process in accordance with claim 1 wherein the stable free radical agent comprises a nitroxide stable free radical.

5. The process in accordance with claim 1 further comprising adding a water soluble or a water-cosolvent soluble inorganic acid, organic sulfonic or organic carboxylic acid during heating of said mixture thereby increasing the rare of formation of said thermoplastic resin or resins from said polymerization of said monomer compound.

6. The process in accordance with claim 1 further comprising adding a tertiary amine promoter compound to said mixture thereby increasing or accelerating the rate of dissociation of said free radical initiator and wherein said free radical initiator is an inorganic peroxide.

7. The process in accordance with claim 1 further comprising:
adding to said water soluble thermoplastic resin or resins a second aqueous solution comprising a free radial initiator, a stable free radical agent, and at least one polymerizable monomer compound, wherein said polymerizable monomer compound of said second aqueous solution contains different monomer components from said polymerizable monomer compound of said aqueous solution, and said free radical initiator and said stable free radical agent of said second aqueous solution are the same or different from said free radical initiator and said stable free radical agent of said aqueous solution, and wherein there is formed a combined mixture;
heating and said combined mixture to form a third solution comprising a mixture of thermoplastic resins comprising a first product resin formed from said thermoplastic resin of claim 1 and added said second monomer, and a second product resin formed from said second monomer;
cooling said third mixture;
optionally isolating said mixture of thermoplastic product resins from said third solution, wherein said first product resin and said second product resin each possess a polydispersity of from 1.1 to 2.0, and wherein the mixture of thermoplastic resins possesses a modality of 2.

8. The process in accordance with claim 1 further comprising:
adding to said water soluble thermoplastic resin or resins a second solution comprising at least one polymerizable monomer compound, wherein said polymerizable monomer compound of said second solution contains different monomer components from said polymerizable monomer compound of said aqueous solution, and wherein there is formed a combined mixture;
heating said combined mixture to form a third solution comprising a water soluble or water-cosolvent miscible diblock copolymer thermoplastic resins comprising a first product resin formed from said thermoplastic resin of claim 1 and said second monomer;
cooling said third solution;
optionally isolating said diblock copolymer thermoplastic resin product from said third solution and wherein the diblock copolymer thermoplastic resin possesses a polydispersity of from 1.1 to 2.0 and a modality of 1.

9. The process in accordance with claim 1, characterized in that:
said free radical initiator is a peroxide free radical initiator;
said stable free radical agent is an nitroxide free radical agent;
said heating step is conducted at a temperature of from 100 to 160°C for a time period of about 30 minutes to about 10 hours;
said thermoplastic resin has a poly dispersity of from 1.1 to 1.5 and a modality of 1; and wherein said process further comprises the steps of cooling said solution after said polymerizing step.

10. The process in accordance with claim 9 wherein the process further comprises the step of isolating said thermoplastic resin and/or washing and drying said thermoplastic resin.

11. The process in accordance with claim 8, wherein said steps of adding, heating and cooling are repeated N times, to form a fourth aqueous solution containing a multiblock copolymer thermoplastic resin having N + 2 blocks and wherein N is a number from 1 to 20 representing the number of times said sequence is repeated, wherein the block or multiblock polymer resin is water soluble or insoluble.

## Patentansprüche

1. Wäßriges Polymerisationsverfahren zur Herstellung eines wasserlöslichen thermoplastischen Harzes oder wasserlöslicher thermoplastischer Harze, umfassend:
Erhitzen einer wäßrigen Lösung, umfassend einen freien radikalischen Starter, ein stabiles, freies radikalisches Mittel, mindestens eine polymerisierbare Monomerverbindung und gegebenenfalls eines oder mehrere hydrophile Colösungsmittel, wobei die zumindest eine polymerisierbare Monomerverbindung im wesentlichen wasserlöslich ist oder in einem Gemisch aus Wasser und einem geeigneten Colösungsmittel löslich ist, und
Polymerisieren der zumindest einen polymerisierbaren Monomerverbindung zur Herstellung eines wasserlöslichen thermoplastischen Harzes oder wasserlöslicher thermoplastischer Harze,
wobei das thermoplastische Harz oder die thermoplastischen Harze eine
Polydispersität von 1,1 bis 2,0 und einen Monomerzu-Polymer-Umsatz von 50 bis 90% aufweist/aufweisen.

2. Verfahren nach Anspruch 1, wobei die polymerisierbare Monomerverbindung ein mit freien Radikalen reaktives, ungesättigtes Monomer ist, das im wesentlichen wasserlöslich ist oder in einem Gemisch aus Wasser und einem geeigneten Colösungsmittel löslich ist und wobei das Monomer ausgewählt ist aus der Gruppe, bestehend aus Säuren, Ammoniumsalzen und Alkalimetallsalzen von Styrolsulfon- und Styrolcarbonsäuren; Vinylsulfonsäuren und Vinylsulfonaten, Vinylphosphonsäuren und Derivaten davon, Amin-, Carboxyl-, Aldehyd-, Alkyl-, Cyano- und Hydroxyl-substituierten Acrylsäuren und Acrylsäureestern mit 2 bis 20 Kohlenstoffatomen; Vinylsulfonen; konjugierten Dienen; Acrylamid; Methacrylamid; Acrylsäure; Methacrylsäure; Acrolein; Dimethylaminomethacrylat; Hydroxy-Niederalkyl- und Amino-Niederalkylacrylaten der Formel CH₂=C(-R¹)-(C=Z)-R², wobei R¹ ausgewählt ist aus der Gruppe, bestehend aus Wasserstoff und Alkyl mit 1 bis 7 Kohlenstoffatomen, R² ausgewählt ist aus der Gruppe, bestehend aus -OR¹ und -NR¹₂ und wobei Z ausgewählt ist aus der Gruppe, bestehend aus Sauerstoff- und Schwefelatomen.

3. Verfahren nach Anspruch 1, wobei das Erhitzen in einem Zeitraum von 1 bis 60 Stunden bei einer Temperatur von 70 bis 160°C erfolgt.

4. Verfahren nach Anspruch 1, wobei das stabile, freie radikalische Mittel ein stabiles, freies radikalisches Nitroxid umfaßt.

5. Verfahren nach Anspruch 1, das außerdem Zugabe von wasserlöslicher oder in Wasser-Colösungsmittel löslicher, anorganischer Säure, organischer Sulfon- oder organischer Carbonsäure während des Erhitzens des Gemisches umfaßt, wodurch die Bildungsgeschwindigkeit des thermoplastischen Harzes oder der thermoplastischen Harze von der Polymerisation der Monomerverbindung erhöht wird.

6. Verfahren gemäß Anspruch 1, das außerdem die Zugabe einer tertiären Amin-Promotorverbindung zu dem Gemisch umfaßt, wodurch die Dissoziationsgeschwindigkeit des freien radikalischen Starters erhöht oder beschleunigt wird und wobei der freie radikalische Starter ein anorganisches Peroxid ist.

7. Verfahren nach Anspruch 1, das außerdem umfaßt:
Zugabe zu dem wasserlöslichen thermoplastischen Harz oder den wasserlöslichen thermoplastischen Harzen einer zweiten wäßrigen Lösung, umfassend einen freien radikalischen Starter, ein stabiles, freies radikalisches Mittel und mindestens eine polymerisierbare Monomerverbindung, wobei die polymerisierbare Monomerverbindung der zweiten wäßrigen Lösung von der polymerisierbaren Monomerverbindung der wäßrigen Lösung verschiedene Monomerkomponenten enthält und der freie radikalische Starter und das stabile, freie radikalische Mittel der zweiten wäßrigen Lösung dieselben sind oder von dem freien radikalischen Starter und dem stabilen, freien radikalischen Mittel der wäßrigen Lösung verschieden sind und wobei ein kombiniertes Gemisch gebildet wird:
Erhitzen des kombinierten Gemisches zur Herstellung einer dritten Lösung, die ein Gemisch von thermoplastischen Harzen, umfassend ein erstes Produktharz, gebildet aus dem thermoplastischen Harz nach Anspruch 1 und zugegeben zu dem zweiten Monomer, und ein zweites Produktharz, gebildet aus dem zweiten Monomer, umfaßt:
Kühlen des dritten Gemisches;
gegebenenfalls Isolieren des Gemisches von thermoplastischen Produktharzen aus der dritten Lösung, wobei das erste Produktharz und das zweite Produktharz jeweils eine Polydispersität von 1,1 bis 2,0 besitzen und wobei das Gemisch der thermoplastischen Harze eine Modalität von 2 aufweist.

8. Verfahren nach Anspruch 1, das außerdem umfaßt:
Zugabe zu dem wasserlöslichen thermoplastischen Harz oder den wasserlöslichen thermoplastischen Harzen einer zweiten Lösung, umfassend mindestens eine polymerisierbare Monomerverbindung, wobei die polymerisierbare Monomerverbindung der zweiten Lösung von der polymerisierbaren Monomerverbindung der wäßrigen Lösung verschiedene Monomerkomponenten enthält und wobei ein kombiniertes Gemisch gebildet wird;
Erhitzen des kombinierten Gemisches zur Herstellung einer dritten Lösung, die ein wasserlösliches oder mit Wasser-Colösungsmittel mischbares Diblockcopolymer, thermoplastische Harze, umfassend ein erstes Produktharz, gebildet aus dem thermoplastischen Harz von Anspruch 1 und das zweite Monomer umfaßt;
Kühlen der dritten Lösung;
gegebenenfalls Isolieren des thermoplastischen Diblockcopolymer-Harzproduktes aus der dritten Lösung und wobei das thermoplastische Diblockcopolymerharz eine Polydispersität von 1,1 bis 2,0 und eine Modalität von 1 aufweist.

9. Verfahren nach Anspruch 1, dadurch gekennzeichnet, daß
der freie radikalische Starter ein freier radikalischer Peroxidstarter ist;
das stabile, freie radikalische Mittel ein freies radikalisches Nitroxidmittel ist;
der Erhitzungsschritt bei einer Temperatur von 100 bis 160°C für einen Zeitraum von etwa 30 Minuten bis etwa 10 Stunden ausgeführt wird;
das thermoplastische Harz eine Polydispersität von 1,1 bis 1,5 und eine Modalität von 1 aufweist und wobei das Verfahren außerdem den Schritt Kühlen der Lösung nach dem Polymerisationsschritt umfaßt.

10. Verfahren nach Anspruch 9, wobei das Verfahren außerdem den Schritt Isolieren des thermoplastischen Harzes und/oder Waschen und Trocknen des thermoplastischen Harzes umfaßt.

11. Verfahren nach Anspruch 8, wobei die Schritte Zugabe, Erhitzen und Kühlen zur Herstellung einer vierten wäßrigen Lösung, die ein thermoplastisches Mehr-Block-Copolymerharz mit N + 2 Blöcken enthält, N-mal wiederholt werden und wobei N eine Zahl von 1 bis 20 darstellt, die die Zahl der Wiederholungen dieser Folge wiedergibt, wobei das Block- oder Mehr-Block-Polymerharz in Wasser löslich oder unlöslich ist.

## Revendications

1. Procédé de polymérisation aqueuse destine à la préparation d'une ou de résines thermoplastiques solubles dans l'eau, comprenant :
le chauffage d'une solution aqueuse comprenant un initiateur de radicaux libres, un agent de radicaux libres stable, au moins un composé de monomère polymérisable, et en option un ou plusieurs cosolvants hydrophiles, dans lequel ledit au moins un composé de monomère polymérisable est pratiquement soluble dans l'eau ou est soluble dans un mélange d'eau et un cosolvant approprié, et
la polymérisation dudit au moins un composé de monomère polymérisable afin de former une résine ou des résines thermoplastiques solubles dans l'eau,
dans lequel la résine ou les résines thermoplastiques présentent
une polydispersion de 1,1 à 2,0 et une conversion de monomère en polymère de 50 à 90 %.

2. Procédé selon la revendication 1, dans lequel le composé de monomère polymérisable est un monomère insaturé réactif aux radicaux libres qui est pratiquement soluble dans l'eau ou est soluble dans un mélange d'eau et d'un cosolvant approprié et dans lequel le monomère est sélectionné parmi le groupe constitué d'acides, de sels ammonium, et de sels d'un métal alcalin d'acides styrène-sulfoniques et styrène-carboxyliques, d'acides vinylsulfoniques et de vinylsulfonates, d'acide vinylphosphonique et de dérivés de celui-ci, d'acides acryliques et d'esters d'acides acryliques amino-, carboxyle-, aldéhydo-, alkyle-, cyano-, et hydroxy- substitués comportant de 2 à 20 atomes de carbone, de vinylsulfones, de diènes conjugués, d'acrylamide, de méthacrylamide, d'acide acrylique, d'acide méthacrylique, d'acroléine, de diméthylaminométhacrylate, d'hydroxyalkylacrylates inférieurs, et d'amino-alkylacrylates inférieurs de formula CH₂=C(-R¹)-(C=Z) -R² où R¹ est choisi parmi le groupe constitué d'un atome d'hydrogène et d'un groupement alkyle de 1 à 7 atomes de carbone, R² est choisi a partir du groupe constitué de -OR¹ et -NR¹₂, et où Z est choisi parmi le groupe constitué des atomes d'oxygène et de soufre.

3. Procédé selon la revendication 1, dans lequel le chauffage est réalisé en un intervalle de temps de 1 à 60 heures à une température de 70 à 160°C.

4. Procédé selon la revendication 1, dans lequel l'agent de radicaux libres stable comprend un radical libre stable de nitroxyde.

5. Procédé selon la revendication 1, comprenant en outre l'addition d'un acide inorganique, d'un acide organique sulfonique ou organique carboxylique solubles dans l'eau ou solubles dans un mélange eau-cosolvant durant le chauffage dudit mélange en augmentant ainsi la vitesse de formation de ladite résine ou desdites résines thermoplastiques à partir de ladite polymérisation dudit composé de monomère.

6. Procédé selon la revendication 1, comprenant en outre l'addition d'un composé de promoteur d'amine tertiaire audit mélange, en augmentant ou accélérant ainsi la vitesse de dissociation dudit initiateur de radicaux libres, et dans lequel ledit initiateur de radicaux libres est un peroxyde inorganique.

7. Procédé selon la revendication 1, comprenant en outre :
l'addition à ladite résine ou auxdites résines thermoplastiques solubles dans l'eau d'une seconde solution aqueuse comprenant un initiateur de radicaux libres, un agent de radicaux libres stable, et au moins un composé de monomère polymérisable, dans lequel ledit composé de monomère polymérisable de ladite seconde solution aqueuse contient des composants de monomères différents dudit composé de monomère polymérisable de ladite solution aqueuse, et ledit initiateur de radicaux libres ainsi que ledit agent de radicaux libres stable de ladite seconde solution aqueuse sont les mêmes ou diffèrent dudit initiateur de radicaux libres et dudit agent de radicaux libres stable de ladite solution aqueuse, et dans lequel il est formé un mélange combiné,
le chauffage dudit mélange combiné afin de former une troisième solution comprenant un mélange de résines thermoplastiques comprenant une première résine de produit formée à partir de ladite résine thermoplastique selon la revendication 1 et dudit second monomère ajouté, et une seconde résine de produit formée à partir dudit second monomère,
le refroidissement dudit troisième mélange,
la séparation optionnelle dudit mélange de résines de produit thermoplastique de ladite troisième solution, dans lequel ladite première résine de produit et ladite seconde résine de produit présentent chacune une polydispersion de 1,1 à 2,0, et dans lequel le mélange des résines thermoplastiques présente une modalité de 2.

8. Procédé selon la revendication 1, comprenant en outre :
l'addition à ladite résine ou auxdites résines thermoplastiques solubles dans l'eau d'une seconde solution comprenant au moins un composé de monomère polymérisable, dans lequel ledit composé de monomère, polymérisable de ladite seconde solution contient des composants monomères différents dudit composé de monomère polymérisable de ladite solution aqueuse, et dans lequel il est formé un mélange combiné,
le chauffage dudit mélange combiné pour former une troisième solution comprenant des résines thermoplastiques de copolymère à deux blocs solubles dans l'eau ou miscibles à un mélange eau-cosolvant, comprenant une première résine de produit formée à partir de ladite résine thermoplastique de la revendication 1 et dudit second monomère,
le refroidissement de ladite troisième solution,
la séparation optionnelle dudit produit de résine thermoplastique de copolymère an deux blocs de ladite troisième solution et dans lequel la résine thermoplastique de copolymère en deux blocs présente une polydispersion de 1,1 à 2,0 et une modalité de 1.

9. Procédé selon la revendication 1, caractérisé en ce que :
ledit initiateur de radicaux libres est un initiateur de radicaux libres de peroxyde,
ledit agent de radicaux libres stable est un agent de radicaux libres de nitroxyde,
ladite étape de chauffage est conduite à une température de 100 à 160°C pendant un intervalle de temps d'environ 30 minutes à environ 10 heures,
ladite résine thermoplastique présente une polydispersion de 1,1 à 1,5 et une modalité de 1, et dans lequel ledit procédé comprend en outre les étapes consistant à refroidir ladite solution après ladite étape de polymérisation.

10. Procédé selon la revendication 9, dans lequel le procédé comprend en outre l'étape consistant à isoler ladite résine thermoplastique et/ou à laver et sécher ladite résine thermoplastique.

11. Procédé selon la revendication 8, dans lequel lesdites étapes d'addition, de chauffage et de refroidissement sont répétées N fois, afin de former une quatrième solution aqueuse contenant une résine thermoplastique de copolymère à blocs multiples présentant N + 2 blocs et dans lequel N est un nombre de 1 à 20 représentant le nombre de fois que ladite séquence est répétée, dans lequel la résine de polymère en bloc ou à blocs multiples est soluble ou insoluble dans l'eau.
